# EUROPEAN PATENT SPECIFICATION

(11) **EP 4 496 040 B1**
(45) Date of publication and mention of the grant of the patent: **18.11.2026**
(21) Application number: 23792194.5
(22) Date of filing: 20.04.2023
(51) Int. Cl.: H01M 4/62, H01M 4/525, C01B 32/158, H01M 4/02

(54) **POSITIVE ELECTRODE AND SECONDARY BATTERY INCLUDING THE POSITIVE ELECTRODE**
POSITIVELEKTRODE UND SEKUNDÄRBATTERIE MIT DER POSITIVELEKTRODE
ÉLECTRODE POSITIVE ET BATTERIE SECONDAIRE LA COMPRENANT

(30) Priority: 20.04.2022 KR 20220049176
(43) Date of publication of application: 22.01.2025
(73) Proprietor: LG Energy Solution, Ltd., Seoul 07335 (KR)
(72) Inventor: MOON, Il Jae, Daejeon 34122 (KR); PARK, Joo Ho, Daejeon 34122 (KR); KIM, Woo Ha, Daejeon 34122 (KR); YOON, Sung Soo, Daejeon 34122 (KR)
(74) Representative: Hoffmann Eitle
(86) International application number: PCT/KR2023/005364
(87) International publication number: WO 2023/204620

(56) References cited:
- JP-A- 2016 048 698
- JP-A- 2021 150 051
- KR-A- 20190 041 715
- KR-A- 20190 131 842
- KR-A- 20210 040 804
- US-A1- 2022 077 450
- VARZI ET AL: "Study of multi-walled carbon nanotubes for lithium-ion battery electrodes - ScienceDirect", vol. 196, no. 6, 1 March 2011 (2011-03-01), AMSTERDAM, NL, pages 3303 - 3309, XP093299242, ISSN: 0378-7753, Retrieved from the Internet <URL:https://www.sciencedirect.com/science/article/pii/S0378775310020926> DOI: 10.1016/j.jpowsour.2010.11.101

## Description

### TECHNICAL FIELD

This application claims priority from Korean Patent Application No. 10-2022-0049176, filed on April 20, 2022.

The present invention relates to a positive electrode, which includes a positive electrode active material in the form of a single particle or a pseudo-single particle and a conductive agent including few-walled carbon nanotubes and single-walled carbon nanotubes, and a secondary battery.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMnO₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used in the field of electric vehicle batteries.

A conventional lithium nickel cobalt manganese oxide was generally in a form of a spherical secondary particle in which hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, active material degradation and gas generation due to a side reaction with the electrolyte solution are increased, and, as a result, there is a problem in that life characteristics are degraded. Particularly, with respect to a positive electrode active material with a high nickel content, since a large amount of highly reactive Ni⁴⁺ ions are generated if charge and discharge of the battery are repeated, structural collapse of the positive electrode active material occurs, and, thus, there is a problem in that degradation of the positive electrode active material is further increased and life characteristics and safety of the battery are further degraded.

Accordingly, attempts have been made to use the positive electrode active material in a form of a single particle having excellent particle strength. However, since an area of a surface of the positive electrode active material in the form of a single particle is relatively large, a larger number of conductive agents is required to sufficiently cover the surface of the positive electrode active material in the form of a single particle with the conductive agent. In other words, in a case in which the same amount of the conductive agent as that of the related art is used, the surface of the positive electrode active material may not be effectively covered by the conductive agent because the number of conductive agents is small. Such a problem occurs especially when conventional multi-walled carbon nanotubes are used as a conductive agent. The multi-walled carbon nanotubes, which have conventionally been mainly used, are carbon nanotubes having a wall number of 8 or more, wherein, since the number of multi-walled carbon nanotubes included in the positive electrode is not large unless an amount of the multi-walled carbon nanotubes is increased, the surface of the positive electrode active material may not be effectively covered by the multi-walled carbon nanotubes. Thus, there is a problem in that resistance of the positive electrode is increased due to a decrease in conductivity of the positive electrode active material. In a case in which the amount of the conventionally used conductive agent is increased to solve this problem, since the amount of the positive electrode active material is relatively reduced, capacity of the positive electrode may be reduced.

Therefore, there is a need to develop a technique capable of securing a positive electrode having low resistance and high capacity while using the positive electrode active material in the form of a single particle.

### DISCLOSURE OF THE INVENTION

### TECHNICAL PROBLEM

An aspect of the present invention provides a positive electrode and a secondary battery. Specifically, in using a lithium composite transition metal oxide in the form of a single particle or a pseudo-single particle in the positive electrode, an object of the present invention is to provide a technique capable of reducing resistance of the positive electrode by improve conductivity of the positive electrode while maintaining capacity of the positive electrode at a high level.

### TECHNICAL SOLUTION

According to an aspect of the present invention, there is provided a positive electrode including a positive electrode active material layer, wherein the positive electrode active material layer includes a positive electrode active material and a conductive agent, wherein the positive electrode active material includes a first lithium composite transition metal oxide in a form of a single particle composed of one primary particle or a pseudo-single particle as an aggregate of 10 or less primary particles, and the conductive agent includes few-walled carbon nanotubes and single-walled carbon nanotubes, wherein the number of walls of the few-walled carbon nanotubes is in a range of 2 to 7.

According to another aspect of the present invention, there is provided a secondary battery including the positive electrode.

### ADVANTAGEOUS EFFECTS

Since a positive electrode according to the present invention includes a first lithium composite transition metal oxide in the form of a single particle or pseudo-single particle, capacity and output of the positive electrode may be improved. Also, with respect to few-walled carbon nanotubes in which the number of walls is in a range of 2 to 7, a larger number of carbon nanotubes may be included in the same amount in comparison to conventional multi-walled carbon nanotubes (e.g., the number of walls is 8 or more). Accordingly, the few-walled carbon nanotubes, in which the number of walls is in a range of 2 to 7, may be effectively adsorbed on a surface of the single particle and/or the pseudo-single particle, and conductivity of the first lithium composite transition metal oxide may be significantly improved. Furthermore, single-walled carbon nanotubes may maintain electrical connection between the first lithium composite transition metal oxides. Accordingly, since electrical resistance of the positive electrode may be significantly reduced, resistance of the secondary battery may be reduced and capacity, lifetime, and storage performance may be improved.

Furthermore, in a case in which the few-walled carbon nanotubes, in which the number of walls is in a range of 2 to 7, and the single-walled carbon nanotubes are used in combination, since a binder in the positive electrode may be uniformly dispersed and present, a binder content for securing positive electrode adhesion may be low. Thus, since an amount of the positive electrode active material may be relatively increased, the capacity of the positive electrode may be improved.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" means a particle unit in which a grain boundary does not exist in appearance when observed by using a scanning electron microscope with a field of view of 5,000 times to 20,000 times. The expression "average particle diameter of the primary particle" means an arithmetic average value of particle diameters which is calculated after measuring the particle diameters of the primary particles observed in a scanning electron microscope image.

In the present invention, the expression "secondary particle" is a particle formed by aggregation of a plurality of primary particles. In the present invention, a secondary particle, in which 10 or less primary particles are aggregated, is referred to as a pseudo-single particle in order to distinguish it from a conventional secondary particle which is formed by aggregation of tens to hundreds of primary particles.

The expression "average particle diameter D₅₀" in the present invention means a particle size on the basis of 50% in a volume cumulative particle size distribution of lithium composite transition metal oxide powder or positive electrode active material powder, wherein, in a case in which the lithium composite transition metal oxide is a secondary particle, it means an average particle diameter of the secondary particle. The average particle diameter D₅₀ may be measured by using a laser diffraction method. For example, after dispersing the lithium composite transition metal oxide powder or positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

A "specific surface area" in the present invention is measured by a Brunauer-Emmett-Teller (BET) method, wherein, specifically, the specific surface area may be calculated from a nitrogen gas adsorption amount at a liquid nitrogen temperature (77K) using BELSORP-mino II by BEL Japan Inc.

In the present invention, a carbon nanotube denotes an allotrope of carbon which has a nanostructure of a cylindrical shape, and includes a wall which constitutes a side surface of the cylindrical shape and is formed of carbon atoms. Tube-shaped carbon nanotubes having a wall number of 1 are referred to as single-walled carbon nanotubes, carbon nanotubes having a wall number of 2 to 7 are classified into few-walled carbon nanotubes, and carbon nanotubes having a wall number of 8 or more are classified into multi-walled carbon nanotubes.

### <Positive Electrode>

A positive electrode according to the present invention includes a positive electrode active material layer, wherein the positive electrode active material layer includes a positive electrode active material and a conductive agent, wherein the positive electrode active material includes a first lithium composite transition metal oxide in a form of a single particle composed of one primary particle or a pseudo-single particle as an aggregate of 10 or less primary particles, and the conductive agent includes few-walled carbon nanotubes and single-walled carbon nanotubes, wherein the number of walls of the few-walled carbon nanotubes is in a range of 2 to 7.

The positive electrode includes a positive electrode active material layer. Specifically, the positive electrode may include a positive electrode collector and a positive electrode active material layer disposed on the positive electrode collector, and, alternatively, the positive electrode may only be composed of the positive electrode active material layer without the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer includes a positive electrode active material and a conductive agent.

### (1) Positive Electrode Active Material

The positive electrode active material includes a first lithium composite transition metal oxide in the form of a single particle composed of one primary particle or a pseudo-single particle as an aggregate of 10 or less primary particles. Specifically, the positive electrode active material may be formed of the first lithium composite transition metal oxide.

The first lithium composite transition metal oxide is in the form of a single particle composed of one primary particle or a pseudo-single particle as an aggregate of 10 or less, preferably 2 to 10, and more preferably 2 to 8 primary particles.

Conventionally, it was common to use a spherical secondary particle, in which tens to hundreds of primary particles are aggregated, as a positive electrode active material of a lithium secondary battery. However, with respect to the positive electrode active material in a form of a secondary particle in which many primary particles are aggregated as described above, there is a problem in that particle breakage, in which the primary particles fall off in a rolling process during preparation of a positive electrode, is likely to occur and cracks occur in the particles during charge and discharge. In a case in which the particle breakage or cracking of the positive electrode active material occurs, since a contact area with an electrolyte solution is increased, a side reaction with the electrolyte solution is increased to cause transition metal dissolution and gas generation, and, as a result, battery performance may be rapidly degraded, or, in severe cases, battery explosion or ignition may occur.

In contrast, since the first lithium composite transition metal oxide in the form of a single particle composed of one primary particle or a pseudo-single particle, in which 10 or less primary particles are aggregated, has higher particle strength than the conventional positive electrode active material in the form of a secondary particle in which tens to hundreds of primary particles are aggregated, the particle breakage during rolling hardly occurs. Also, with respect to the positive electrode active material in the form of a single particle or a pseudo-single particle, since the number of primary particles constituting the particle is small, changes due to volume expansion and contraction of the primary particles during charge and discharge are small, and accordingly, the occurrence of cracks in the particles is significantly reduced. Accordingly, since a gas generation amount during battery operation may be reduced, stability of the battery may be improved.

The first lithium composite transition metal oxide may include a compound represented by [Formula 1] below.

[Formula 1] Liₐ₁[Ni_{b1}Co_{c1}M¹_{d1}M²ₑ₁]O₂

In Formula 1, M¹ may be at least one selected from manganese (Mn) and aluminum (Al), M² may be at least one selected from zirconium (Zr), tungsten (W), yttrium (Y), barium (Ba), calcium (Ca), titanium (Ti), magnesium (Mg), tantalum (Ta), and niobium (Nb), and 0.8≤a1≤1.2, 0.8≤b1<1, 0<c1<0.2, 0<d1<0.2, and 0≤e1≤0.1.

In Formula 1, M¹ may be at least one selected from Mn and Al, and may specifically be Mn or Mn and Al.

M² may be at least one selected from Zr, W, Y, Ba, Ca, Ti, Mg, Ta, and Nb, may specifically be at least one selected from the group consisting of Zr, Y, Mg, and Ti, and may more preferably be Zr, Y, or a combination thereof. The element M² is not necessarily included, but, in a case in which it is included in an appropriate amount, it may play a role in promoting grain growth during sintering or improving crystal structure stability.

a1 represents a molar ratio of lithium in the first lithium composite transition metal oxide, wherein a1 may satisfy 0.8≤a1≤1.2, 0.85≤a1≤1.15, or 0.9≤a1≤1.2. When the molar ratio of the lithium satisfies the above range, a crystal structure of the lithium nickel-based oxide may be stably formed.

b1 represents a molar ratio of nickel among total metals excluding lithium in the first lithium composite transition metal oxide, wherein b1 may satisfy 0.8≤b1<1, 0.82≤b1<1, or 0.83≤b1<1. When the molar ratio of the nickel satisfies the above range, high energy density may be exhibited to achieve high capacity.

c1 represents a molar ratio of cobalt among the total metals excluding lithium in the first lithium composite transition metal oxide, wherein c1 may satisfy 0<c1<0.2, 0<c1<0.18, or 0.01≤c1≤0.17. When the molar ratio of the cobalt satisfies the above range, good resistance characteristics and output characteristics may be achieved.

d1 represents a molar ratio of element M¹ among the total metals excluding lithium in the first lithium composite transition metal oxide, wherein d1 may satisfy 0<d1<0.2, 0<d1<0.18, or 0.01≤d1≤0.17. When the molar ratio of the element M¹ satisfies the above range, structural stability of the positive electrode active material is excellent.

e1 represents a molar ratio of element M² among the total metals excluding lithium in the first lithium composite transition metal oxide, wherein e1 may satisfy 0≤e1≤0.1 or 0≤e1≤0.05.

The compound represented by [Formula 1] includes a high amount of nickel. As the amount of the nickel is increased, a breakage phenomenon of the positive electrode active material is increased during a process of preparing the positive electrode (for example, a rolling process), and an amount of small-sized positive electrode active material (fine powder) is increased. A surface of the positive electrode active material must be sufficiently covered with the conductive agent to improve conductivity of the positive electrode, wherein, if the fine powder is increased as described above, there is a problem in that the surface of the positive electrode active material to be covered by the conductive agent is excessively increased. Since an amount of multi-wall carbon nanotubes is excessively increased to sufficiently cover the increased surface of the positive electrode active material with the conventional multi-wall carbon nanotubes, capacity of the positive electrode may be reduced. In contrast, if the few-walled carbon nanotubes having a wall number of 2 to 7 of the present invention are used, since a relatively large number of carbon nanotubes may be included for the same amount, a total surface area of the positive electrode active material, which is increased by the fine powder, may be sufficiently and effectively covered. Accordingly, the conductivity of the positive electrode may be improved while maintaining the capacity of the positive electrode.

An average particle diameter of the primary particles (the primary particles included in the single particle or pseudo-single particle) included in the first lithium composite transition metal oxide may be in a range of 1 µm to 10 µm, particularly 2 µm to 7 µm, and more particularly 3 µm to 5 µm. In a case in which the average particle diameter of the primary particles satisfies the above range, the breakage of the first lithium composite transition metal oxide may be suppressed even during rolling, and output characteristics may be improved by securing a lithium diffusion path.

A Brunauer-Emmett-Teller (BET) specific surface area of the first lithium composite transition metal oxide may be in a range of 0.1 m²/g to 3 m²/g, particularly 0.3 m²/g to 2 m²/g, and more particularly 0.5 m²/g to 1.0 m²/g. When the above range is satisfied, since the breakage phenomenon of the positive electrode active material may be reduced during the rolling process, the amount of the fine positive electrode active material powder may be reduced, and thus, gas generation during battery operation may be minimized.

The positive electrode active material may further include a second lithium composite transition metal oxide. The second lithium composite transition metal oxide may include a compound represented by [Formula 2] below.

[Formula 2] Liₐ₂[Ni_{b2}Co_{c2}M³_{d2}M⁴ₑ₂]O₂

In Formula 2, M³ may be at least one selected from Mn and Al, M⁴ may be at least one selected from Zr, W, Y, Ba, Ca, Ti, Mg, Ta, and Nb, and 0.8≤a2≤1.2, 0.8≤b2<1, 0<c2<0.17, 0<d2<0.17, and 0≤e2≤0.1.

a2 represents a molar ratio of lithium in the second lithium composite transition metal oxide, wherein a2 may satisfy 0.8≤a2≤1.2, 0.85≤a2≤1.15, or 0.9≤a2≤1.2. When the molar ratio of the lithium satisfies the above range, a crystal structure of the lithium nickel-based oxide may be stably formed.

b2 represents a molar ratio of nickel among total metals excluding lithium in the second lithium composite transition metal oxide, wherein b2 may satisfy 0.8≤b2<1, 0.82≤b2<1, or 0.83≤b2<1. When the molar ratio of the nickel satisfies the above range, high energy density may be exhibited to achieve high capacity.

c2 represents a molar ratio of cobalt among the total metals excluding lithium in the second lithium composite transition metal oxide, wherein c2 may satisfy 0<c2<0.2, 0<c2<0.18, or 0.01≤c2≤0.17. When the molar ratio of the cobalt satisfies the above range, good resistance characteristics and output characteristics may be achieved.

d2 represents a molar ratio of element M³ among the total metals excluding lithium in the second lithium composite transition metal oxide, wherein d2 may satisfy 0<d2<0.2, 0<d2<0.18, or 0.01≤d2≤0.17. When the molar ratio of the element M³ satisfies the above range, structural stability of the positive electrode active material is excellent.

e2 represents a molar ratio of element M⁴ among the total metals excluding lithium in the second lithium composite transition metal oxide, wherein e2 may satisfy 0≤e2≤0.1 or 0≤e2≤0.05.

The second lithium composite transition metal oxide may be a secondary particle having a form in which tens or hundreds of primary particles are bonded to each other through granulation. Specifically, the second lithium composite transition metal oxide may be a secondary particle in which more than 10 primary particles are granulated.

Since the second lithium composite transition metal oxide is used in combination with the first lithium composite transition metal oxide, the positive electrode active material may have a bimodal particle size distribution. The bimodal particle size distribution may mean that particles having different particle size distributions are mixed with each other to have a particle size distribution including at least two peaks during particle size analysis through the laser diffraction method mentioned in the specification.

When the second lithium composite transition metal oxide is used in combination with the first lithium composite transition metal oxide, since a packing ratio of the positive electrode active material layer is increased, a desired thickness of the positive electrode may be achieved even with a smaller force during rolling, and thus, the breakage of the positive electrode active material may be minimized and energy density of the battery may be improved. Also, since a total specific surface area of the positive electrode active material may be reduced in comparison to a case where only the first lithium composite transition metal oxide is used, an equivalent level of battery output performance may be obtained even with a small amount of the conductive agent and capacity of the battery may be improved.

An average particle diameter D₅₀ of the second lithium composite transition metal oxide may be in a range of 10 µm to 20 µm, particularly 12 µm to 18 µm, and more particularly 13 µm to 17 µm. When the above range is satisfied, since the packing ratio of the positive electrode active material layer is increased, the desired thickness of the positive electrode may be achieved even with a smaller force during rolling, and thus, the breakage of the positive electrode active material may be minimized and the energy density of the battery may be improved. The above average particle diameter D₅₀ in this paragraph means an average particle diameter D₅₀ of the secondary particle.

When the first lithium composite transition metal oxide and the second lithium composite transition metal oxide are used in combination, since the packing ratio of the positive electrode active material layer is increased, the desired thickness of the positive electrode may be achieved even with the smaller force during the rolling, and thus, the breakage of the positive electrode active material may be minimized and the energy density of the battery may be improved. Also, when the first lithium composite transition metal oxide and the second lithium composite transition metal oxide are used in combination, since the breakage phenomenon of the positive electrode active material may be improved, and thus, a level of gas generation in the battery may be reduced. Furthermore, since the total specific surface area of the positive electrode active material may be at an appropriate level when the first lithium composite transition metal oxide and the second lithium composite transition metal oxide are used in combination, an equivalent level of battery output may be obtained even with a small amount of the conductive agent, and thus, the battery capacity may be improved by relatively increasing the amount of the positive electrode active material.

A weight ratio of the first lithium composite transition metal oxide to the second lithium composite transition metal oxide may be in a range of 1:9 to 5:5, particularly 2:8 to 4:6, and more particularly 3:7 to 4:6. When the above range is satisfied, a space between the second lithium composite transition metal oxides may be effectively filled with the first lithium composite transition metal oxides and fine powder of the second lithium composite transition metal oxide. Thus, since the desired thickness of the positive electrode may be achieved even with a smaller force during the rolling process, the breakage of the positive electrode active material may be further minimized and the energy density of the battery may be further improved.

### (2) Conductive Agent

The conductive agent includes few-walled carbon nanotubes having a wall number of 2 to 7; and single-walled carbon nanotubes.

Conventional multi-walled carbon nanotubes commonly used had a wall number of 8 or more (e.g., 8 to 11). In a case in which a typical positive electrode active material in the form of a secondary particle is used, sufficient electrical conductivity may be achieved even if the conventional multi-walled carbon nanotubes were used in a low amount (e.g., 0.4 to 0.6 wt%). However, with respect to the first lithium composite transition metal oxide in the form of a single particle or pseudo-single particle, since it has higher resistance and larger surface area than the conventional positive electrode active material in the form of a secondary particle, the surface of the first lithium composite transition metal oxide is not sufficiently covered by the multi-walled carbon nanotubes when the same amount of the multi-walled carbon nanotubes as in the case of using the positive electrode active material in the form of a secondary particle is used, and thus, a problem arises in that electrical conductivity of the positive electrode is reduced. Accordingly, in order to achieve sufficient electrical conductivity by using the conventional multi-walled carbon nanotubes having a wall number of 8 or more, the amount of the conductive agent must be high, wherein, if the amount of the multi-walled carbon nanotubes is increased, agglomeration in a positive electrode slurry occurs to increase viscosity, and, as a result, coating properties are deteriorated. Thus, for smooth coating properties, the viscosity of the positive electrode slurry must be reduced by decreasing a solid content in the positive electrode slurry. However, if the solids content in the positive electrode slurry is decreased, there is a problem in that the amount of the active material is decreased to degrade capacity characteristics. Also, since the amount of the first lithium composite transition metal oxide is relatively decreased when the amount of the multi-walled carbon nanotubes is increased, there is also a problem in that the capacity is reduced.

As a result of a significant amount of research conducted to solve these problems, the present inventors have confirmed that, in a case in which few-walled carbon nanotubes having a wall number of 2 to 7 and single-walled carbon nanotubes are used as a conductive agent together with the first lithium composite transition metal oxide in the form of a single particle or pseudo-single particle, since the number of carbon nanotubes included in the positive electrode active material layer is increased even if the same or lower amount of the carbon nanotubes than that of the related art is used, the surface of the positive electrode active material may be sufficiently covered with the carbon nanotubes, and, accordingly, resistance of the positive electrode is significantly reduced. Also, in this case, the present inventors have found that the viscosity of the positive electrode slurry may be maintained low even if the solid content of the positive electrode slurry is high (e.g., 70 wt% to 80 wt%), the coating properties of the positive electrode slurry may be improved to increase the capacity of the positive electrode.

### 1) Few-walled Carbon Nanotubes Having a Wall Number of 2 to 7

The few-walled carbon nanotubes having a wall number of 2 to 7 may be present by being adsorbed on the surface of the positive electrode active material (e.g., the surface of the first lithium composite transition metal oxide and/or second lithium composite transition metal oxide to be described later) . The few-walled carbon nanotubes improve the conductivity of the positive electrode by covering the surface of the positive electrode active material or connecting the positive electrode active materials.

The wall number of the few-walled carbon nanotubes is in a range of 2 to 7, preferably 2 to 6, and more preferably 3 to 6. In a case in which the wall number is less than 2, bulk density of the carbon nanotubes may be decreased so that transport and input of the carbon nanotubes may not be smooth, and, since viscosity of a positive electrode slurry composition is excessively increased, productivity of the positive electrode may be consequently reduced. In a case in which the wall number is greater than 7, an effect of improving resistance characteristics of the positive electrode and slurry viscosity is reduced.

In the present invention, the productivity of the positive electrode may be secured and simultaneously, the conductivity of the positive electrode may be effectively improved by using the few-walled carbon nanotubes having a wall number of 2 to 7. More specifically, when the first lithium composite transition metal oxide in the form of a single particle or pseudo-single particle having a large surface area is used, a sufficient number of carbon nanotubes is required to sufficiently cover the surface of the first lithium composite transition metal oxide. With respect to the few-walled carbon nanotubes having a wall number of 2 to 7, since the number of carbon nanotubes within the same amount is greater than that of the multi-walled carbon nanotubes, the surface of the first lithium composite transition metal oxide may be effectively covered even with a relatively lower amount, and accordingly, the conductivity of the positive electrode may be significantly improved. Also, since the conductivity is ensured without increasing the amount of the carbon nanotubes, a relatively larger amount of the positive electrode active material may be included, and thus, the capacity of the positive electrode may be ensured.

A BET specific surface area of the few-walled carbon nanotubes may be in a range of 300 m²/g to 500 m²/g, preferably 330 m²/g to 500 m²/g, and more preferably 400 m²/g to 500 m²/g. In a case in which the above range is satisfied, since transport and input of the few-walled carbon nanotubes are smooth, the productivity of the positive electrode may be improved. Also, since the few-walled carbon nanotubes may effectively cover the surface of the first lithium composite transition metal oxide, the conductivity of the positive electrode may be effectively improved.

An average diameter of the few-walled carbon nanotubes may be in a range of 3 nm to 7 nm, particularly 4 nm to 6 nm, and more particularly 4.5 nm to 5.5 nm. When the above range is satisfied, since the transport and input of the few-walled carbon nanotubes are smooth, the productivity of the positive electrode may be improved, and, since the few-walled carbon nanotubes may effectively cover the surface of the first lithium composite transition metal oxide having high specific surface area and low lithium ion diffusion resistance, the conductivity of the positive electrode may be effectively improved. The average diameter means an average value of diameters of top 30 few-walled carbon nanotubes with a larger diameter and bottom 30 few-walled carbon nanotubes among the few-walled carbon nanotubes when the positive electrode active material layer of the prepared positive electrode is checked at a magnification of 10,000 through a scanning electron microscope (SEM).

An average length of the few-walled carbon nanotubes may be in a range of 0.2 µm to 5 µm, particularly 0.5 µm to 3 µm, and more particularly 0.7 µm to 1.5 µm. When the above range is satisfied, the surface of the positive electrode active material may be effectively covered even with a small amount, and accordingly, the conductivity of the positive electrode may be improved. The average length means an average value of lengths of top 30 few-walled carbon nanotubes with a larger length and bottom 30 few-walled carbon nanotubes among the few-walled carbon nanotubes when the positive electrode active material layer of the prepared positive electrode is checked at a magnification of 10,000 through an SEM.

The few-walled carbon nanotubes may be included in an amount of 0.1 wt% to 3 wt%, particularly 0.2 wt% to 2 wt%, and more particularly 0.3 wt% to 1 wt%, for example, 0.45 wt% to 1 wt% based on a total weight of the positive electrode active material layer. When the above range is satisfied, sufficient electrical conductivity may be achieved, the solid content in the positive electrode slurry may be maintained high so that the amount of the positive electrode active material in the positive electrode active material layer may be increased, and, as a result, excellent capacity characteristics may be achieved.

### 2) Single-walled Carbon Nanotubes

The single-walled carbon nanotubes may play a role in electrically connecting the positive electrode active materials to each other in the positive electrode active material layer. The single-walled carbon nanotubes may exist strand by strand in the positive electrode active material layer or may exist in the form of a small bundle (rope shape) in which a plurality of single-walled carbon nanotubes are bonded side by side.

A BET specific surface area of the single-walled carbon nanotubes may be in a range of 800 m²/g to 1,600 m²/g, preferably 1,000 m²/g to 1,400 m²/g, and more preferably 1,100 m²/g to 1,300 m²/g. When the above range is satisfied, the conductivity of the positive electrode may be effectively improved even with the use of a small amount of the single-walled carbon nanotubes.

An average diameter of the single-walled carbon nanotubes may be in a range of 1 nm to 2.5 nm, particularly 1.3 nm to 2 nm, and more particularly 1.5 nm to 2 nm. When the above range is satisfied, due to a large specific surface area of the single-walled carbon nanotubes, the conductivity of the positive electrode may be effectively improved even if the amount of the conductive agent is low. The average diameter means an average value of diameters of top 30 single-walled carbon nanotubes with a larger diameter and bottom 30 single-walled carbon nanotubes among the single-walled carbon nanotubes when the positive electrode active material layer of the prepared positive electrode is checked at a magnification of 10,000 through an SEM.

An average length of the single-walled carbon nanotubes may be in a range of 0.5 µm to 30 µm, particularly 2 µm to 20 µm, and more particularly 3 µm to 15 µm. When the above range is satisfied, since conductive connection between the positive electrode active materials is excellent, the resistance of the positive electrode may be effectively reduced. Also, since the connection between the positive electrode active materials may be effectively maintained even when a volume of the positive electrode active material is changed during battery operation, life characteristics of the battery may be improved. The average length means an average value of lengths of top 30 single-walled carbon nanotubes with a larger length and bottom 30 single-walled carbon nanotubes among the single-walled carbon nanotubes when the positive electrode active material layer of the prepared positive electrode is checked at a magnification of 10,000 through an SEM.

The single-walled carbon nanotubes may be included in an amount of 0.005 wt% to 0.15 wt%, particularly 0.01 wt% to 0.1 wt%, and more particularly 0.02 wt% to 0.07 wt% based on the total weight of the positive electrode active material layer. When the above range is satisfied, initial resistance of the positive electrode may be reduced, and the life characteristics of the battery may be improved. Also, since the conductivity may be improved even if the amount of the positive electrode active material is low, the energy density of the battery may be increased.

A weight ratio of the few-walled carbon nanotubes to the single-walled carbon nanotubes may be in a range of 5:1 to 50:1, particularly 7:1 to 40:1, and more particularly 10:1 to 30:1. When the above range is satisfied, since the surface of the positive electrode active material is effectively covered with the few-walled carbon nanotubes and the single-walled carbon nanotubes may conductively and effectively connect the positive electrode active materials, a conductive network in the positive electrode may be more effectively formed. Accordingly, the resistance of the positive electrode is reduced, and the capacity and life characteristics of the battery may be further improved.

In the positive electrode active material layer, a total amount of the few-walled carbon nanotubes and the single-walled carbon nanotubes may be in a range of 0.2 wt% to 2.0 wt%, particularly 0.3 wt% to 1.5 wt%, and more particularly 0.4 wt% to 1.0 wt% based on the total weight of the positive electrode active material layer. When the above range is satisfied, the capacity of the positive electrode may be maintained at a high level while the conductivity in the positive electrode is improved. Also, in a case in which the weight ratio range of the few-walled carbon nanotubes to the single-walled carbon nanotubes is satisfied while satisfying the above range, a decrease in the resistance and an improvement in initial capacity and capacity retention of the battery may be achieved more effectively.

### (3) Others

The positive electrode active material layer may further include a binder.

The binder improves the adhesion between the positive electrode active material particles and the adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode according to the present invention may have an A value defined by the following Equation (1) of 3 or more, preferably 3 to 7, and more preferably 4 to 6.$A = \left({BET}_{1}\times {W}_{1}{+ BET}_{2}\times {W}_{2}\right) / \left({BET}_{3}\times {W}_{3}{+ BET}_{4}\times {W}_{4}\right)$ (Equation 1)

In Equation (1), BET₁ is a specific surface area of the few-walled carbon nanotubes, BET₂ is a specific surface area of the single-walled carbon nanotubes, BET₃ is a specific surface area of the first lithium composite transition metal oxide, BET₄ is a specific surface area of the second lithium composite transition metal oxide, W₁ is a weight % of the few-walled carbon nanotubes relative to the total weight of the positive electrode active material layer, W₂ is a weight % of the single-wall carbon nanotubes relative to the total weight of the positive electrode active material layer, W₃ is a weight % of the first lithium composite transition metal oxide relative to the total weight of the positive electrode active material layer, and W₄ is a weight % of the second lithium composite transition metal oxide relative to the total weight of the positive electrode active material layer. In this case, a unit of the specific surface area is m²/g.

The A value of Equation (1) represents a ratio of a total specific surface area of the conductive agent to the total specific surface area of the positive electrode active material included in the positive electrode active material layer, wherein, since a contact area between the positive electrode active material and the conductive agent is increased when the A value is 3 or more, an effect of improving resistance characteristics, capacity characteristics, and life characteristics of the positive electrode is more excellent.

The positive electrode may be prepared according to a typical method of preparing a positive electrode. For example, after a positive electrode slurry is prepared by mixing the positive electrode active material, the binder, and/or the conductive agent in a solvent and is coated on the positive electrode collector, the positive electrode may be prepared by drying and rolling the coated positive electrode collector. In this case, types and amounts of the positive electrode active material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

As another method, the positive electrode may be prepared by casting the positive electrode slurry on a separate support and then laminating a film separated from the support on the positive electrode collector.

### Secondary Battery

A secondary battery according to another aspect of the present invention includes the positive electrode of the above-described embodiment. The secondary battery may be a lithium secondary battery. Specifically, the secondary battery includes a positive electrode, a negative electrode disposed to face the positive electrode, a separator disposed between the positive electrode and the negative electrode, and an electrolyte, wherein the positive electrode is as described above. Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a negative electrode binder and a negative electrode conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode conductive agent is used to provide conductivity to the electrode, wherein any conductive agent may be used without particular limitation as long as it has suitable electron conductivity without causing adverse chemical changes in the battery. Specific examples of the negative electrode conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The negative electrode conductive agent may be typically included in an amount of 1 wt% to 30 wt%, preferably 1 wt% to 20 wt%, and more preferably 1 wt% to 10 wt% based on a total weight of the negative electrode active material layer.

The negative electrode binder improves the adhesion between negative electrode active material particles and the adhesion between the negative electrode active material and the negative electrode collector. Specific examples of the negative electrode binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The negative electrode binder may be included in an amount of 1 wt% to 30 wt%, preferably 1 wt% to 20 wt%, and more preferably 1 wt% to 10 wt% based on the total weight of the negative electrode active material layer.

The negative electrode active material layer, for example, may be prepared by coating a negative electrode slurry including the negative electrode active material and optionally the negative electrode binder and the negative electrode conductive agent on the negative electrode collector and drying the coated negative electrode collector, or may be prepared by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present invention is not limited thereto. The additive may be included in an amount of 0.1 wt% to 10 wt%, preferably, 0.1 wt% to 5 wt% based on a total weight of the electrolyte.

As described above, since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### EXAMPLES

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

Li[Ni_{0.86}Co_{0.08}Mn_{0.06}]O₂, which was in the form of a single particle composed of one primary particle, had a unimodal particle size distribution, and had an average particle diameter D₅₀ of 3.7 µm and a BET specific surface area of 0.7 m²/g, was used as a positive electrode active material. Few-walled carbon nanotubes having a specific surface area of 400 m²/g and a wall number of 5 and single-walled carbon nanotubes having a specific surface area of 1,200 m²/g were used as a conductive agent. Polyvinylidene fluoride was used as a binder. A positive electrode slurry having a solid content of 70 wt% was prepared by adding the positive electrode active material, the conductive agent, and the binder to N-methyl pyrrolidone and mixing them. One surface of an aluminum current collector having a width of 340 mm and a thickness of 15 mm was coated with the positive electrode slurry, then dried at 130°C and rolled to prepare a positive electrode including a positive electrode active material layer.

In this case, a weight ratio of the positive electrode active material, the few-walled carbon nanotubes, the single-walled carbon nanotubes, and the binder in the positive electrode active material layer was 97.37:0.6:0.03:2.0. This was also the same as an amount (wt%) of each component.

### Example 2

A positive electrode was prepared in the same manner as in Example 1 except that the weight ratio of the positive electrode active material, the few-walled carbon nanotubes, the single-walled carbon nanotubes, and the binder in the positive electrode active material layer was modified to 97.37:0.615:0.015:2.0. This was also the same as an amount (wt%) of each component.

### Example 3

A positive electrode was prepared in the same manner as in Example 1 except that the weight ratio of the positive electrode active material, the few-walled carbon nanotubes, the single-walled carbon nanotubes, and the binder in the positive electrode active material layer was modified to 97.685:0.3:0.015:2.0. This was also the same as an amount (wt%) of each component.

### Example 4

A positive electrode was prepared in the same manner as in Example 1 except that Li[Ni_{0.86}Co_{0.08}Mn_{0.06}]O₂, which was in the form of a single particle composed of one primary particle and had an average particle diameter D₅₀ of 3.7 µm and a BET specific surface area of 0.7 m²/g, and Li[Ni_{0.92}Co_{0.04}Mn_{0.02}Al_{0.02}]O₂, which was in the form of a secondary particle and had an average particle diameter D₅₀ of 15 µm and a BET specific surface area of 0.5 m²/g, were used at a weight ratio of 4:6 as a positive electrode active material.

### Comparative Example 1

A positive electrode was prepared in the same manner as in Example 1 except that multi-walled carbon nanotubes having a specific surface area of 260 m²/g and a wall number of 10 was used instead of the few-walled carbon nanotubes having a specific surface area of 400 m²/g and a wall number of 5.

### Comparative Example 2

A positive electrode was prepared in the same manner as in Example 1 except that the few-walled carbon nanotubes having a specific surface area of 400 m²/g and a wall number of 5 were only used as the conductive agent without using the single-walled carbon nanotubes. In this case, a weight ratio of the positive electrode active material, the few-walled carbon nanotubes, and the binder in the positive electrode active material layer was 97.4:0.6:2.0. This was also the same as an amount (wt%) of each component.

### Comparative Example 3

A positive electrode was prepared in the same manner as in Example 1 except that the single-walled carbon nanotubes were only used as the conductive agent without using the few-walled carbon nanotubes having a specific surface area of 400 m²/g and a wall number of 5. In this case, a weight ratio of the positive electrode active material, the single-walled carbon nanotubes, and the binder in the positive electrode active material layer was 97.97:0.03:2.0. This was also the same as an amount (wt%) of each component.

### Comparative Example 4

A positive electrode was intended to be prepared in the same manner as in Example 1 except that multi-walled carbon nanotubes having a specific surface area of 600 m²/g and a wall number of 10 were used instead of the few-walled carbon nanotubes having a specific surface area of 400 m²/g and a wall number of 5, but, since application of a positive electrode slurry composition was extremely difficult due to excessively high viscosity of the positive electrode slurry composition, the positive electrode may not be prepared.

Average diameters and average lengths of the few-walled carbon nanotubes, the single-walled carbon nanotubes, and the multi-walled carbon nanotubes were respectively checked by measuring the positive electrodes of the examples and the comparative examples with an SEM at a magnification of 10,000. This corresponds to an average value of diameters (or lengths) of top 30 carbon nanotubes and bottom 30 carbon nanotubes.
1) Few-walled carbon nanotubes having a specific surface area of 400 m²/g
   average diameter: 5 nm, average length: 1 µm
2) Single-walled carbon nanotubes
   average diameter: 1.5 nm, average length: 5 µm
3) Multi-walled carbon nanotubes having a specific surface area of 260 m²/g
   average diameter: 10 nm, average length: 1 µm

**[Table 1]**

| | Few-walled or multi-walled CNT | | Single-walled CNT | | First lithium composite transition metal oxide | | Second lithium composite transition metal oxide | | A |
|---|---|---|---|---|---|---|---|---|---|
| | Spec ific surf ace area (m²/g ) | Amou nt (wt% ) | Speci fic surfa ce area (m²/g) | Amoun t (wt %) | Speci fic surfa ce area (m²/g) | Amount (wt%) | Spec ific surf ace area (m²/g ) | Amoun t (wt %) | |
| Example 1 | 400 | 0.6 | 1,200 | 0.03 | 0.7 | 97.37 | - | 0 | 4.049 |
| Example 2 | 400 | 0.61 5 | 1,200 | 0.015 | 0.7 | 97.37 | - | 0 | 3.873 |
| Example 3 | 400 | 0.3 | 1,200 | 0.015 | 0.7 | 97.685 | | 0 | 2.018 |
| Example 4 | 400 | 0.6 | 1,200 | 0.03 | 0.7 | 38.948 | 0.5 | 58.42 2 | 4.887 |
| Comparati ve Example 1 | 260 | 0.6 | 1,200 | 0.03 | 0.7 | 93.37 | - | 0 | 0.528 |
| Comparati ve Example 2 | 400 | 0.6 | - | 0 | 0.7 | 97.4 | - | 0 | 3.520 |
| Comparati ve Example 3 | - | 0 | 1,200 | 0.03 | 0.7 | 97.97 | - | 0 | 0.524 |

### Experimental Example 1: Battery Resistance Evaluation

### (1) Preparation of Battery

A mixture of artificial graphite, natural graphite, and SiO as a negative electrode active material, super C as a conductive agent, and SBR/CMC, as a binder, were mixed in a weight ratio of 96:1:3 to prepare a negative electrode slurry, and one surface of a copper current collector was coated with the negative electrode slurry, dried at 130°C, and then rolled to prepare a negative electrode.

A lithium secondary battery was prepared by preparing an electrode assembly by disposing a separator between the positive electrode and the negative electrode, disposing the electrode assembly in a battery case, and then injecting an electrolyte solution into the case. The electrolyte solution was prepared by dissolving 1 M LiPF₆ in a mixed organic solvent, in which ethylene carbonate/dimethyl carbonate/diethyl carbonate were mixed in a volume ratio of 1:2:1, and adding 2 wt% of vinylene carbonate (VC).

### (2) Battery Resistance Evaluation

After charging and discharging the battery three times at 0.3 C-rate at room temperature, battery resistance was evaluated by a resistance value which was checked when a current was applied at 2.5 C-rate for 10 seconds at a state of charge (SOC) of 50. Measurement results are presented in Table 2 below.

### Experimental Example 2: Initial Discharge Capacity and Capacity Retention Evaluation

After charging of each of the lithium secondary batteries prepared in Experimental Example 1 at 1 C to 4.25 V in a constant current-constant voltage (CC-CV) mode at 45°C and discharging of each lithium secondary battery at a constant current of 0.5 C to 2.5 V were set as one cycle and 200 cycles of the charging and discharging were performed, initial discharge capacity and capacity retention were measured to evaluate life characteristics. Measurement results are presented in Table 2 below.

**[Table 2]**

| | Battery resistance (ohm) | Initial discharge capacity (mAh/g) | Capacity retention (%) |
|---|---|---|---|
| Example 1 | 1.02 | 52 | 88.1 |
| Example 2 | 1.07 | 51.99 | 86.3 |
| Example 3 | 1.09 | 50.44 | 85.2 |
| Example 4 | 0.98 | 54.08 | 90.2 |
| Comparative Example 1 | 1.05 | 50.76 | 83.5 |
| Comparative Example 2 | 1.12 | 50.22 | 80.2 |
| Comparative Example 3 | 1.15 | 49.4 | 77.4 |

## Claims

1. A positive electrode comprising a positive electrode active material layer,
wherein the positive electrode active material layer comprises a positive electrode active material and a conductive agent,
wherein the positive electrode active material comprises a first lithium composite transition metal oxide in the form of a single particle composed of one primary particle or a pseudo-single particle as an aggregate of 10 or less primary particles, and
the conductive agent comprises few-walled carbon nanotubes and single-walled carbon nanotubes,
wherein the number of walls of the few-walled carbon nanotubes is in the range of 2 to 7.

2. The positive electrode of claim 1, wherein the few-walled carbon nanotubes have an average diameter of 3 nm to 7 nm, as determined by the method set out in the description.

3. The positive electrode of claim 1, wherein the few-walled carbon nanotubes have a Brunauer-Emmett-Teller (BET) specific surface area of 300 m²/g to 500 m²/g, as determined by the method set out in the description.

4. The positive electrode of claim 1, wherein the first lithium composite transition metal oxide comprises a compound represented by Formula 1:
[Formula 1] Liₐ₁[Ni_{b1}Co_{c1}M¹_{d1}M²ₑ₁]O₂
wherein, in Formula 1, M¹ is at least one of manganese (Mn) and aluminum (Al); M² is at least one of zirconium (Zr), tungsten (W), yttrium (Y), barium (Ba), calcium (Ca), titanium (Ti), magnesium (Mg), tantalum (Ta), and niobium (Nb); 0.8≤a1≤1.2; 0.8≤b1<1; 0<c1<0.2; 0<d1<0.2; and 0≤e1≤0.1.

5. The positive electrode of claim 1, wherein
the average diameter of the primary particles included in the first lithium composite transition metal oxide is in the range of 1 µm to 10 µm, as determined by the method set out in the description; and/or
the first lithium composite transition metal oxide has a BET specific surface area of 0.1 m²/g to 3 m²/g, as determined by the method set out in the description.

6. The positive electrode of claim 1, wherein the few-walled carbon nanotubes are included in an amount of 0.1 wt% to 3 wt% based on the total weight of the positive electrode active material layer.

7. The positive electrode of claim 1, wherein the single-walled carbon nanotubes have a BET specific surface area of 800 m²/g to 1,600 m²/g, as determined by the method set out in the description.

8. The positive electrode of claim 1, wherein the single-walled carbon nanotubes are included in an amount of 0.005 wt% to 0.15 wt% based on the total weight of the positive electrode active material layer.

9. The positive electrode of claim 1, wherein the weight ratio of the few-walled carbon nanotubes to the single-walled carbon nanotubes is in the range of 5:1 to 50:1.

10. The positive electrode of claim 9, wherein the weight ratio of the few-walled carbon nanotubes to the single-walled carbon nanotubes is in the range of 10:1 to 30:1.

11. The positive electrode of claim 1, wherein, in the positive electrode active material layer, the total amount of the few-walled carbon nanotubes and the single-walled carbon nanotubes is in the range of 0.2 wt% to 2.0 wt% based on the total weight of the positive electrode active material layer.

12. The positive electrode of claim 1, wherein the positive electrode active material further comprises a second lithium composite transition metal oxide which has an average particle diameter D₅₀ of 10 µm to 20 µm, as determined by the method set out in the description.

13. The positive electrode of claim 12, wherein the second lithium composite transition metal oxide comprises a compound represented by Formula 2:
[Formula 2] Liₐ₂[Ni_{b2}Co_{c2}M³_{d2}M⁴ₑ₂]O₂
wherein, in Formula 2, M³ is at least one of Mn and Al; M⁴ is at least one of Zr, W, Y, Ba, Ca, Ti, Mg, Ta, and Nb; 0.8≤a2≤1.2; 0.8≤b2<1; 0<c2<0.17; 0<d2<0.17; and 0≤e2≤0.1.

14. The positive electrode of claim 1, wherein the positive electrode active material further comprises a second lithium composite transition metal oxide, and the positive electrode has an A value defined by Equation (1) of 3 or more:$A = \left({BET}_{1}\times {W}_{1}{+ BET}_{2}\times {W}_{2}\right) / \left({BET}_{3}\times {W}_{3}{+ BET}_{4}\times {W}_{4}\right)$ (Equation 1) wherein, in Equation (1), BET₁ is the specific surface area of the few-walled carbon nanotubes, BET₂ is the specific surface area of the single-walled carbon nanotubes, BET₃ is the specific surface area of the first lithium composite transition metal oxide, BET₄ is the specific surface area of the second lithium composite transition metal oxide, W₁ is the weight % of the few-walled carbon nanotubes relative to the total weight of the positive electrode active material layer, W₂ is the weight % of the single-wall carbon nanotubes relative to the total weight of the positive electrode active material layer, W₃ is the weight % of the first lithium composite transition metal oxide relative to the total weight of the positive electrode active material layer, and W₄ is the weight % of the second lithium composite transition metal oxide relative to the total weight of the positive electrode active material layer, wherein the specific surface areas are determined by the method set out in the description.

15. A secondary battery comprising the positive electrode of claim 1.

## Patentansprüche

1. Positivelektrode, umfassend eine aktive Positivelektroden-Materialschicht,
wobei die aktive Positivelektroden-Materialschicht ein aktives Positivelektroden-Material und ein leitfähiges Mittel umfasst,
wobei das aktive Positivelektroden-Material ein erstes Lithium-Verbundübergangsmetalloxid in Form eines Einzelpartikels, der aus einem Primärpartikel zusammengesetzt ist, oder eines Pseudo-Einzelpartikels als Aggregat aus 10 oder weniger Primärpartikeln umfasst, und
das leitfähige Mittel wenigwandige Kohlenstoffnanoröhren und einwandige Kohlenstoffnanoröhren umfasst,
wobei die Anzahl an Wänden der wenigwandigen Kohlenstoffnanoröhren im Bereich von 2 bis 7 liegt.

2. Positivelektrode nach Anspruch 1, wobei die wenigwandigen Kohlenstoffnanoröhren einen durchschnittlichen Durchmesser von 3 nm bis 7 nm, wie durch das in der Beschreibung dargelegte Verfahren bestimmt, aufweisen.

3. Positivelektrode nach Anspruch 1, wobei die wenigwandigen Kohlenstoffnanoröhren eine Brunauer-Emmett-Teller- (BET) -spezifische Oberfläche von 300 m²/g bis 500 m²/g, wie durch das in der Beschreibung dargelegte Verfahren bestimmt, aufweisen.

4. Positivelektrode nach Anspruch 1, wobei das erste Lithium-Verbundübergangsmetalloxid eine Verbindung umfasst, dargestellt durch Formel 1:
[Formel 1] Liₐ₁[Ni_{b1}Co_{c1}M¹_{d1}M²ₑ₁]O₂
wobei in Formel 1 M¹ mindestens eines von Mangan (Mn) und Aluminium (Al) ist; M² mindestens eines von Zirkonium (Zr), Wolfram (W), Yttrium (Y), Barium (Ba), Calcium (Ca), Titan (Ti), Magnesium (Mg), Tantal (Ta) und Niob (Nb) ist; 0,8≤a1≤1,2; 0,8≤b1<1; 0<c1<0,2; 0<d1<0,2; und 0≤e1≤0,1.

5. Positivelektrode nach Anspruch 1, wobei
der durchschnittliche Durchmesser der im ersten Lithium-Verbundübergangsmetalloxid eingeschlossenen Primärpartikel im Bereich von 1 µm bis 10 µm, wie durch das in der Beschreibung dargelegte Verfahren bestimmt, liegt; und/oder
das erste Lithium-Verbundübergangsmetalloxid eine BET-spezifische Oberfläche von 0,1 m²/g bis 3 m²/g, wie durch das in der Beschreibung dargelegte Verfahren bestimmt, aufweist.

6. Positivelektrode nach Anspruch 1, wobei die wenigwandigen Kohlenstoffnanoröhren in einer Menge von 0,1 Gew.-% bis 3 Gew.-%, bezogen auf das Gesamtgewicht der aktiven Positivelektroden-Materialschicht, eingeschlossen sind.

7. Positivelektrode nach Anspruch 1, wobei die einwandigen Kohlenstoffnanoröhren eine BET-spezifische Oberfläche von 800 m²/g bis 1 600 m²/g, wie durch das in der Beschreibung dargelegte Verfahren bestimmt, aufweisen.

8. Positivelektrode nach Anspruch 1, wobei die einwandigen Kohlenstoffnanoröhren in einer Menge von 0,005 Gew.-% bis 0,15 Gew.-%, bezogen auf das Gesamtgewicht der aktiven Positivelektroden-Materialschicht, eingeschlossen sind.

9. Positivelektrode nach Anspruch 1, wobei das Gewichtsverhältnis der wenigwandigen Kohlenstoffnanoröhren zu den einwandigen Kohlenstoffnanoröhren im Bereich von 5:1 bis 50:1 liegt.

10. Positivelektrode nach Anspruch 9, wobei das Gewichtsverhältnis der wenigwandigen Kohlenstoffnanoröhren zu den einwandigen Kohlenstoffnanoröhren im Bereich von 10:1 bis 30:1 liegt.

11. Positivelektrode nach Anspruch 1, wobei in der aktiven Positivelektroden-Materialschicht die Gesamtmenge der wenigwandigen Kohlenstoffnanoröhren und der einwandigen Kohlenstoffnanoröhren im Bereich von 0,2 Gew.-% bis 2,0 Gew.-%, bezogen auf das Gesamtgewicht der aktiven Positivelektroden-Materialschicht, liegt.

12. Positivelektrode nach Anspruch 1, wobei das aktive Positivelektroden-Material weiter ein zweites Lithium-Verbundübergangsmetalloxid umfasst, das einen durchschnittlichen Partikeldurchmesser D₅₀ von 10 µm bis 20 µm, wie durch das in der Beschreibung dargelegte Verfahren bestimmt, aufweist.

13. Positivelektrode nach Anspruch 12, wobei das zweite Lithium-Verbundübergangsmetalloxid eine Verbindung umfasst, dargestellt durch Formel 2:
[Formel 2] Liₐ₂[Ni_{b2}Co_{c2}M³_{d2}M⁴ₑ₂]O₂
wobei in Formel 2 M³ mindestens eines von Mn und Al ist; M⁴ mindestens eines von Zr, W, Y, Ba, Ca, Ti, Mg, Ta und Nb ist; 0,8≤a2≤1,2; 0,8≤b2<1; 0<c2<0,17; 0<d2<0,17; und 0≤e2≤0,1.

14. Positivelektrode nach Anspruch 1, wobei das aktive Positivelektroden-Material weiterhin ein zweites Lithium-Verbundübergangsmetalloxid umfasst und die Positivelektrode einen durch Gleichung (1) definierten A-Wert von 3 oder mehr aufweist: Gleichung (1): $A = \left({BET}_{1}\times {W}_{1}{+ BET}_{2}\times {W}_{2}\right) / \left({BET}_{3}\times {W}_{3}{+ BET}_{4}\times {W}_{4}\right)$
wobei in Gleichung (1) BET₁ die spezifische Oberfläche der wenigwandigen Kohlenstoffnanoröhren ist, BET₂ die spezifische Oberfläche der einwandigen Kohlenstoffnanoröhren ist, BET₃ die spezifische Oberfläche des ersten Lithium-Verbundübergangsmetalloxids ist, BET₄ die spezifische Oberfläche des zweiten Lithium-Verbundübergangsmetalloxids ist, W₁ die Gew.-% der wenigwandigen Kohlenstoffnanoröhren bezogen auf das Gesamtgewicht der aktiven Positivelektroden-Materialschicht sind, W₂ die Gew.-% der einwandigen Kohlenstoffnanoröhren bezogen auf das Gesamtgewicht der aktiven Positivelektroden-Materialschicht sind, W₃ die Gew.-% des ersten Lithium-Verbundübergangsmetalloxids bezogen auf das Gesamtgewicht der aktiven Positivelektroden-Materialschicht sind und W₄ die Gew.-% des zweiten Lithium-Verbundübergangsmetalloxids bezogen auf das Gesamtgewicht der aktiven Positivelektroden-Materialschicht sind, wobei die spezifischen Oberflächen durch das in der Beschreibung dargelegte Verfahren bestimmt werden.

15. Sekundärbatterie, umfassend die Positivelektrode nach Anspruch 1.

## Revendications

1. Électrode positive comprenant une couche de matériau actif d'électrode positive,
dans laquelle la couche de matériau actif d'électrode positive comprend un matériau actif d'électrode positive et un agent conducteur,
dans laquelle le matériau actif d'électrode positive comprend un premier oxyde de métal de transition composite de lithium sous la forme d'une particule unique composée d'une particule primaire ou d'une pseudo-particule unique en tant qu'agrégat de 10 particules primaires ou moins, et
l'agent conducteur comprend des nanotubes de carbone présentant peu de parois et des nanotubes de carbone à paroi unique,
dans laquelle le nombre de parois des nanotubes de carbone présentant peu de parois est dans la plage allant de 2 à 7.

2. Électrode positive selon la revendication 1, dans laquelle les nanotubes de carbone présentant peu de parois présentent un diamètre moyen allant de 3 nm à 7 nm, tel que déterminé par le procédé exposé dans la description.

3. Électrode positive selon la revendication 1, dans laquelle les nanotubes de carbone présentant peu de parois présentent une surface spécifique de Brunauer-Emmett-Teller (BET) allant de 300 m²/g à 500 m²/g, telle que déterminée par le procédé exposé dans la description.

4. Électrode positive selon la revendication 1, dans laquelle le premier oxyde de métal de transition composite de lithium comprend un composé représenté par la formule 1 :
[Formule 1] Liₐ₁[Ni_{b1}Co_{c1}M¹_{d1}M²ₑ₁]O₂
dans laquelle, dans la formule 1, M¹ est au moins un parmi le manganèse (Mn) et l'aluminium (Al) ; M² est au moins un parmi le zirconium (Zr), le tungstène (W), l'yttrium (Y), le baryum (Ba), le calcium (Ca), le titane (Ti), le magnésium (Mg), le tantale (Ta) et le niobium (Nb) ; 0,8≤a1≤1,2 ; 0,8≤b1<1 ; 0<c1<0,2 ; 0<d1<0,2 ; et 0≤e1≤0,1.

5. Électrode positive selon la revendication 1, dans laquelle
le diamètre moyen des particules primaires incluses dans le premier oxyde de métal de transition composite de lithium est dans la plage allant de 1 µm à 10 µm, tel que déterminé par le procédé exposé dans la description ; et/ou
le premier oxyde de métal de transition composite de lithium présente une surface spécifique de BET allant de 0,1 m²/g à 3 m²/g, telle que déterminée par le procédé exposé dans la description.

6. Électrode positive selon la revendication 1, dans laquelle les nanotubes de carbone présentant peu de parois sont inclus dans une quantité allant de 0,1 % en poids à 3 % en poids par rapport au poids total de la couche de matériau actif d'électrode positive.

7. Électrode positive selon la revendication 1, dans laquelle les nanotubes de carbone à paroi unique présentent une surface spécifique de BET allant de 800 m²/g à 1600 m²/g, telle que déterminée par le procédé exposé dans la description.

8. Électrode positive selon la revendication 1, dans laquelle les nanotubes de carbone à paroi unique sont inclus en une quantité allant de 0,005 % en poids à 0,15 % en poids par rapport au poids total de la couche de matériau actif d'électrode positive.

9. Électrode positive selon la revendication 1, dans laquelle le rapport en poids des nanotubes de carbone présentant peu de parois aux nanotubes de carbone à paroi unique est dans la plage allant de 5:1 à 50:1.

10. Électrode positive selon la revendication 9, dans laquelle le rapport en poids des nanotubes de carbone présentant peu de parois aux nanotubes de carbone à paroi unique est dans la plage allant de 10:1 à 30:1.

11. Électrode positive selon la revendication 1, dans laquelle, dans la couche de matériau actif d'électrode positive, la quantité totale des nanotubes de carbone présentant peu de parois et des nanotubes de carbone à paroi unique est dans la plage allant de 0,2 % en poids à 2,0 % en poids par rapport au poids total de la couche de matériau actif d'électrode positive.

12. Électrode positive selon la revendication 1, dans laquelle le matériau actif d'électrode positive comprend en outre un deuxième oxyde de métal de transition composite de lithium qui présente un diamètre moyen des particules D₅₀ allant de 10 µm à 20 µm, tel que déterminé par le procédé exposé dans la description.

13. Électrode positive selon la revendication 12, dans laquelle le deuxième oxyde de métal de transition composite de lithium comprend un composé représenté par la formule 2 :
[Formule 2] Liₐ₂[Ni_{b2}Co_{c2}M³_{d2}M⁴ₑ₂]O₂
dans laquelle, dans la formule 2, M³ est au moins un parmi Mn et Al ; M⁴ est au moins un parmi Zr, W, Y, Ba, Ca, Ti, Mg, Ta et Nb ; 0,8≤a2≤1,2 ; 0,8≤b2<1 ; 0<c2<0,17 ; 0<d2<0,17 ; et 0≤e2≤0,1.

14. Électrode positive selon la revendication 1, dans laquelle le matériau actif d'électrode positive comprend en outre un deuxième oxyde de métal de transition composite de lithium, et l'électrode positive présente une valeur A définie par l'équation (1) de 3 ou plus :$A = \left({BET}_{1}\times {W}_{1}{+ BET}_{2}\times {W}_{2}\right) / \left({BET}_{3}\times {W}_{3}{+ BET}_{4}\times {W}_{4}\right)$ (Equation 1)
dans laquelle, dans l'équation (1), BET₁ est la surface spécifique des nanotubes de carbone présentant peu de parois, BET₂ est la surface spécifique des nanotubes de carbone à paroi unique, BET₃ est la surface spécifique du premier oxyde de métal de transition composite de lithium, BET₄ est la surface spécifique du deuxième oxyde de métal de transition composite de lithium, W₁ est le pourcentage en poids des nanotubes de carbone présentant peu de parois par rapport au poids total de la couche de matériau actif d'électrode positive, W₂ est le pourcentage en poids des nanotubes de carbone à paroi unique par rapport au poids total de la couche de matériau actif d'électrode positive, W₃ est le pourcentage en poids du premier oxyde de métal de transition composite de lithium par rapport au poids total de la couche de matériau actif d'électrode positive, et W₄ est le pourcentage en poids du deuxième oxyde de métal de transition composite de lithium par rapport au poids total de la couche de matériau actif d'électrode positive, dans laquelle les surfaces spécifiques sont déterminées par le procédé exposé dans la description.

15. Batterie secondaire comprenant l'électrode positive selon la revendication 1.
